(19) Europäisches Patentamt

European Patent Office

Office européen des brevets

(11) EP 0 546 469 B1

(12) **EUROPEAN PATENT SPECIFICATION**

(45) Date of publication and mention
of the grant of the patent:
**14.05.1997 Bulletin 1997/20**

(51) Int Cl.6: **H04N 9/64**

(21) Application number: **92120710.6**

(22) Date of filing: **04.12.1992**

(54) **Method and apparatus for vertical interpolation**

Verfahren und Vorrichtung zur vertikalen Interpolation

Méthode et dispositif d'interpolation verticale

(84) Designated Contracting States:
**AT BE CH DE DK ES FR GB GR IE IT LI LU MC NL PT SE**

(30) Priority: **13.12.1991 EP 91403382**

(43) Date of publication of application:
**16.06.1993 Bulletin 1993/24**

(73) Proprietor: **THOMSON multimedia
92400 Courbevoie (FR)**

(72) Inventors:
• **Boie, Werner
F-67100 Strasbourg (FR)**

• **Watrin, Thierry
F-67200 Strasbourg (FR)**

(74) Representative:
**Hartnack, Wolfgang, Dipl.-Ing. et al
Deutsche Thomson-Brandt GmbH
Licensing & Intellectual Property,
Göttinger Chaussee 76
30453 Hannover (DE)**

(56) References cited:
**EP-A- 0 333 480          US-A- 4 796 085**

## Description

The present invention relates to a method and to an apparatus for vertical interpolation.

Background

The reduction of the chrominance resolution in vertical direction with regard to the luminance resolution in TV systems is a valid point which corresponds to the behaviour of the human visual system. For that reason in TV systems like SECAM, MAC, MUSE, etc. the chrominance signals are transmitted on alternate lines. In doing this some precautions have to be taken in account in order to avoid sampling artefacts, but these precautions are not made in each of these standards.

US-A-4796085 discloses an vertical colour signal interpolating apparatus using the arithmetic mean for interpolation.

Invention

It is one object of the invention to disclose a method for improved vertical chrominance interpolation. This object is reached by the inventive method disclosed in claim 1.

It is a further object of the invention to disclose an apparatus which utilizes the inventive method. This object is reached by the inventive apparatus disclosed in claim 7.

The most severe artefacts like mentioned above are exhibited in the SECAM standard because of the applied-four field sequence. It causes a 12.5Hz activity which is particularly disturbing. This is due to the fact that a great deal of the chrominance flickering will be converted into a luminance flickering by the display non-linearity. In todays analogue SECAM encoders there is no pre-filtering applied and also not foreseen in the next future. That means the problem of how to overcome the 12.5Hz edge flickering in SECAM decoders still exists.

According to the invention the chrominance signal can be prefiltered prior to alternate line omission and post-filtered for a full-line display.

In principle the inventive method consists in vertical interpolation of lines in alternate line transmission TV systems and/or recording systems, wherein the missing lines and pixel values of missing lines, respectively, are calculated according to the formula

$$C(i)_{int} = [\Delta_{down} * C(i-1) + \Delta_{up} * C(i+1)] / [\Delta_{down} + \Delta_{up}],$$

pixel difference $\Delta_{down} = |C(i)-C(i+2)|$,
pixel difference $\Delta_{up} = |C(i)-C(i-2)|$,

wherein C(i) is the respective value from the actual line and C(i-1) is the respective value from the line above and C(i-2) is the respective value from the preceding line and C(i+1) is the respective value from the line below and C(i+2) is the respective value from the following line.

Advantageously said interpolation is adaptively changed to

$$C(i)_{int} = [C(i-1)+C(i+1)]/2,$$

if the values of C(i-1) and C(i+1) are equal.

The C(i)$_{int}$, C(i-1) and C(i+1) values may correspond to lines with an U colour component and the C(i), C(i-2) and C(i+2) values may correspond to lines with a V colour component and viceversa, respectively.

Advantageous additional embodiments of the inventive method are resulting from the respective dependent claims.

In principle the inventive apparatus consists of a first line delay circuit 431 to which U and V input signals are fed and which input is connected to the inverting input of a first combination circuit 421, wherein the output of said first line delay circuit 431 is connected to a second line delay circuit 432, to the inverting inputs of a second combination circuit 420 and of a third combination circuit 441 and to the first input of a first adder 442, and wherein the output of said second line delay circuit 432 is connected to a third line delay circuit 433, to the non-inverting input of said first combination circuit 421, to the inverting input of a fourth combination circuit 422 and to the first input of a multiplexer 444 which outputs the U and V output signals and wherein the output of said third line delay circuit 433 is connected to a fourth line delay circuit 434 and to the non-inverting inputs of said second 420 and said third 441 combination circuits, and wherein the output of said fourth line delay circuit 434 is connected to the non-inverting input of said fourth combination circuit 422 and the output of said third combination circuit 441 is connected to the first input of a first multiplier 443 and the output of this multiplier is connected to the second input of said first adder 442 and the output of this adder is connected to the second input of said multiplexer 444 and the output of said first combination circuit 421 is connected via a first absolute value circuit 419 to the first input of a second adder 417, representing signal $\underline{\Delta}_{up}$, and the output of said fourth combination circuit 422 is connected via a second absolute value circuit 420 to the first input of a third adder 418, representing signal $\underline{\Delta}_{down}$, and the output of said second combination circuit 420 is connected via a third absolute value circuit 423 and via a modified reciprocal value circuit 424, which adds e.g. one LSB, to the second inputs of said second 417 and third 418 adders, representing signal $\Delta$, and wherein the output of said second adder 417 is connected via a first horizontal lowpass filter 415 to the first input of a fourth adder 45 and to the first input of a second multiplier 47, representing signal $\Delta_{up}$, and the output of said second adder 417 is connected via a second horizontal lowpass filter 416 to the second input of said fourth adder 45, representing signal $\Delta_{down}$, and wherein the output of said fourth adder 45 is connected via a reciprocal value circuit 46 to the second input of said second multiplier 47 and the output signal $\Delta$ of this multiplier is connected to the second input of said first multiplier 443 and said multiplexer 444 is synchronized by the U/V alternation signal coming from a line identification signal 48.

Advantageous additional embodiments of the inventive apparatus are resulting from the respective dependent claims.

## Drawings

Preferred embodiments of the invention will now be described with reference to the accompanying drawings, in which:

Fig. 1     shows the sampling grid and spectrum for U and V signals;
Fig. 2     depicts 12.5Hz flickering at a vertical chrominance transition;
Fig. 3     shows the inventive adaptive vertical chrominance interpolation;
Fig. 4     depicts an apparatus for the inventive interpolation.

## Preferred embodiments

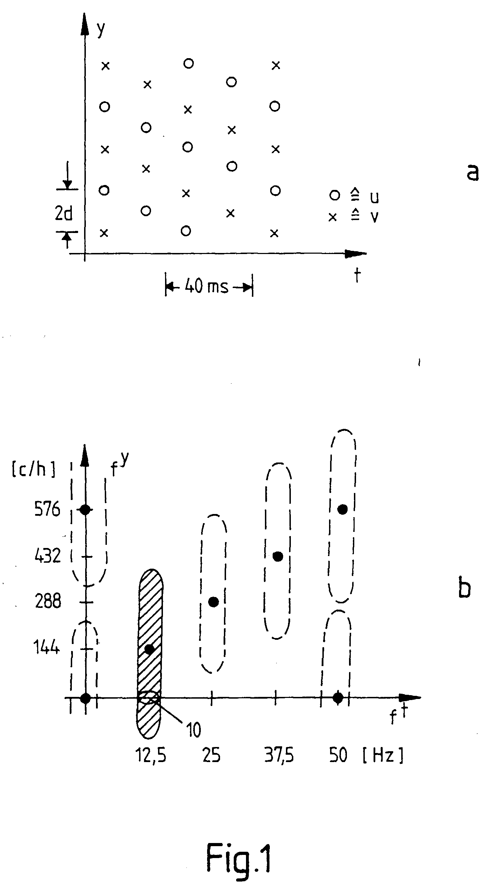

Fig. 1a illustrates the y-t-scanning grid applied within the SECAM standard for the U and V component. The lines within a field have a distance of 2∗d from each other. Fig. 1b shows the corresponding $f^y$-$f^t$-spectra. The first vertical repeat center is located at 576c/h (cycles per picture height) in case of a 625 line system.

If the chrominance signal is scanned in such a way and displayed without post-filtering the spectral area 10 of the spectrum centered on 144c/h vertically and 12.5Hz temporally would be near completely visible.

This does mean that the alternate-line structure would become visible. Todays state-of-the-art SECAM decoders utilize only a line delay for the reconstruction of the missing U and V lines. In terms of the frequency behaviour this corresponds to a vertical post-filtering consisting of a cosine function with a first zero crossing at 144c/h. Therefore, only the frequencies around the center of this alias spectrum can be suppressed and for plane colour areas only an acceptable reconstruction is possible. It fails at horizontal edges.

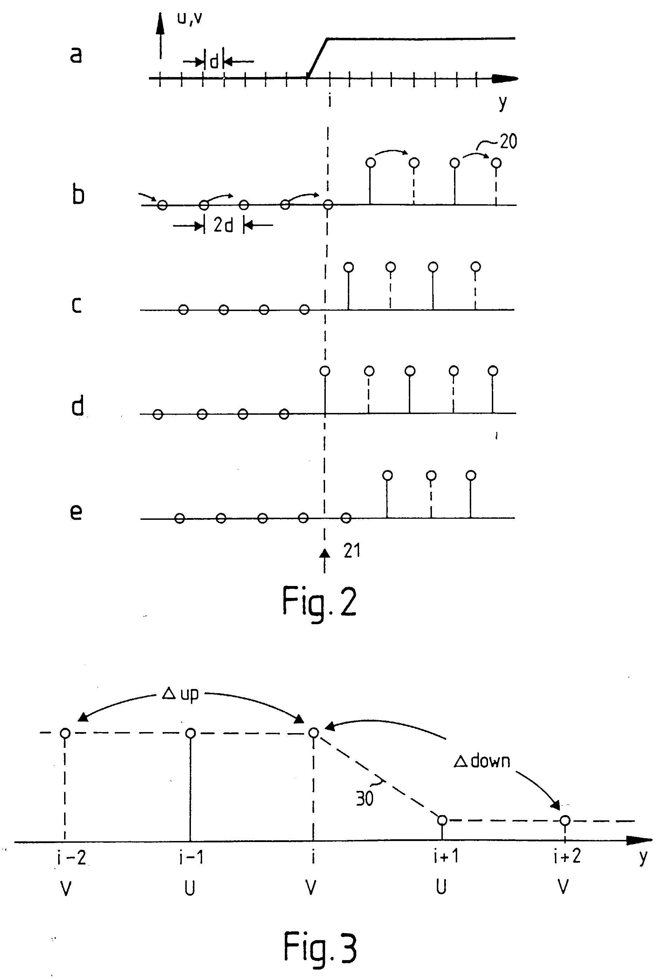

In Fig. 2a an example for a horizontal edge at position 21 in the spatial domain is given. Fig. 2a-e show the corresponding sample values for a sequence of 4 fields. With respect to line i at position 21 the scanned edge appears after the line repetition only once within the 4-field sequence. This results mainly in said 12.5Hz edge flickering. In case of line repetition 20 the dashed sample values are generated.

The inventive adaptive filter for improving the picture quality is based on the idea of using additional information from the other colour component or even from the luminance signal. This can be done because there is normally a significant correlation between these components. Fig. 3 will illustrate the principal processing for a vertical chrominance transition 30. In the drawing it is assumed that the missing U component for the line i is to be interpolated. Instead of a simple average value of the adjacent values U(i+1) and U(i-1) for value U(i) an adaptively weighted average value should be applied which is controlled by the vertical differences $\Delta_{down}$ and $\Delta_{up}$ of the V component. In Fig. 3 the difference $\Delta_{up}$ becomes zero while $\Delta_{down}$ represents the step size of the colour edge. According to the formula given by

$$U(i)_{int} = [\Delta_{down} * U(i-1) + \Delta_{up} * U(i+1)]/[\Delta_{down} + \Delta_{up}]$$

$$= U(i-1) + [\Delta_{up}/(\Delta_{down} + \Delta_{up})] * [U(i+1) - U(i-1)]$$

$$= U(i-1) + \alpha * [U(i+1) - U(i-1)]$$

and

$$\underline{\Delta}_{down} = |V(i) - V(i+2)|$$

$$\underline{\Delta}_{up} = |V(i) - V(i-2)|$$

only line U(i-1) will be used for the vertical interpolation in this example. That means with respect to Fig. 3 that the transition is located at the correct position and the full step height of the edge is preserved, which supplies reconstructed pictures with a maximum vertical sharpness and without 12.5Hz edge flickering.

Furthermore this adaptation should be enabled only if there is a difference of U between line i-1 and i+1, otherwise a simple line average should be carried out. The enabling signal advantageously behaves like an inverse function of the difference of U in accordance with

$$\Delta = 1/[|U(i-1)-U(i+1)|+\varepsilon_1]+\varepsilon_2$$

in which $\varepsilon_1$, $\varepsilon_2$ are small figures, e.g. an LSB bit or a value '1', just to provide reasonable results.

In order to achieve a uniform vertical interpolation along a colour edge for noisy pictures the weighting factors $\Delta_{up}$ and $\Delta_{down}$ advantageously are horizontally lowpass filtered. An average over 5 pixels ($f_s = 17.718MHz$) will already be sufficient. Advantageously the luminance signal can be used for a further improvement of the adaptivity in case that the other colour component contains no transition. Then the resulting weighting factors become

$$\Delta_{down} = \{\underline{\Delta}_{down} + \Delta + \Delta_{lum\ down}\}_{LP}$$

$$\Delta_{up} = \{\underline{\Delta}_{up} + \Delta + \Delta_{lum\ up}\}_{LP}$$

and

$$\Delta_{lum\ down} = |Y(i) - Y(i+1)|$$

$$\Delta_{lum\ up} = |Y(i) - Y(i-1)|$$

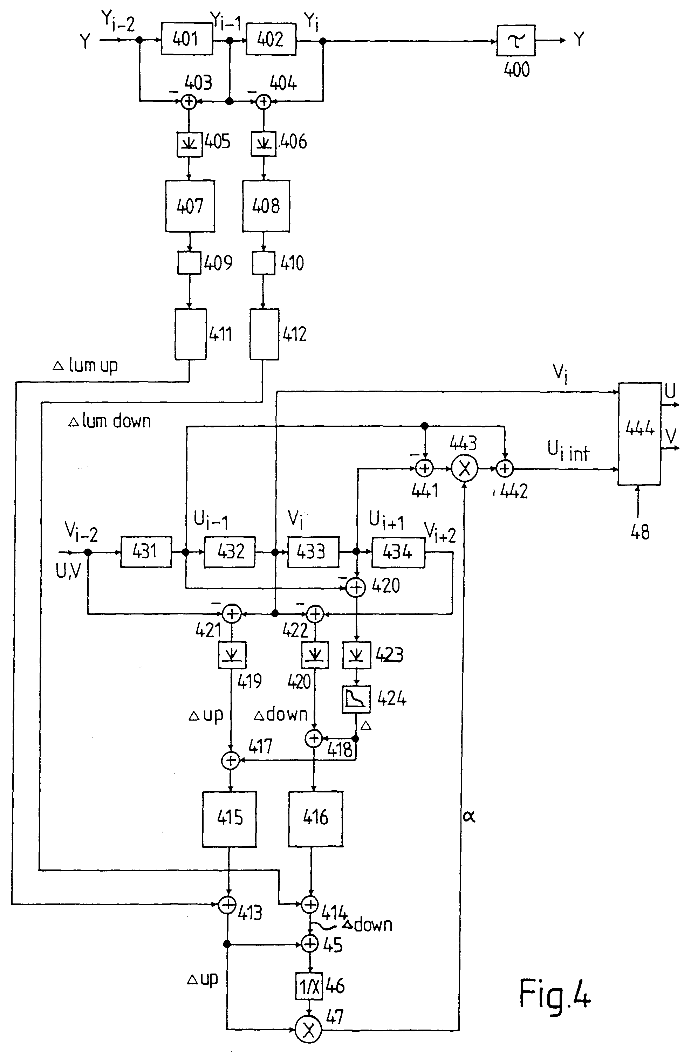

The processing in Fig. 4 follows the mathematical formula given above except that in the next line to be interpolated the U and V signals in the formula have to be exchanged. The multiplexer 444 at the output of the interpolation filter which is synchronized by the U/V alternation signal coming from the line identification signal 48 takes this fact into account.

The Y input signal is fed to a first line delay circuit 401 and to the inverting input of a combination circuit 403. The output of line delay circuit 401 is connected to a second line delay circuit 402, to the non-inverting input of combination circuit 403 and to the inverting input of a combination circuit 404. The output of line delay circuit 402 is connected to the non-inverting input of combination circuit 404 and to a delay circuit 400 which outputs the Y output signal. The delay time $\tau$ is matched to the U/V processing time. The signals Y(i-2), Y(i-1) and Y(i) are respectively present at the input of first line delay circuit 401, at the input and at the output of second line delay circuit 402.

The output signal of combination circuit 403 is serially fed to an absolute value circuit 405, to a horizontal low pass filter 407, to a subsampling circuit 409, to a third line delay circuit 411 and to the first input of an adder 413. At the output of line delay circuit 411 the signal $\Delta_{lum\ up}$ is available. The output signal of combination circuit 404 is serially fed to an absolute value circuit 406, to a horizontal low pass filter 408, to a subsampling circuit 410, to a third line delay circuit 412 and to the first input of an adder 414. At the output of line delay circuit 412 the signal $\Delta_{lum\ down}$ is available. The U and V input signals are fed to a fifth line delay circuit 431 and to the inverting input of a combination circuit 421. The output of line delay circuit 431 is connected to a sixth line delay circuit 432, to the inverting inputs of combination circuits 420 and 441 and to the first input of an adder 442. The output of line delay circuit 432 is connected to a seventh line delay circuit 433, to the non-inverting input of combination circuit 421, to the inverting input of combination circuit 422 and to the first input of multiplexer 444 which outputs the U and V output signals. The output of line delay circuit 433 is connected to an eighth line delay circuit 434 and to the non-inverting inputs of combination circuits 420 and 441. The output of line delay circuit 434 is connected to the non-inverting input of combination circuit 422.

The output of combination circuit 441 is connected to the first input of a multiplier 443. The output of this multiplier is connected to the second input of adder 442. The output of adder 442 is connected to the second input of multiplexer 444. For example the signals V(i-2), U(i-1), V(i), U(i+1), V(i+2) are respectively present at the input of line delay circuit 431, at the input of line delay circuit 432, at the input of line delay circuit 433 and at the input and at the output of line delay circuit 434 and the signals V(i) and U(i)$_{int}$ are present at the inputs of multiplexer 444.

The output of combination circuit 421 is connected via an absolute value circuit 419 to the first input of an adder 417, representing signal $\underline{\Delta}_{up}$, and the output of combination circuit 422 is connected via an absolute value circuit 420 to the first input of an adder 418, representing signal $\underline{\Delta}_{down}$. The output of combination circuit 420 is connected via an absolute value circuit 423 and via a modified reciprocal value circuit 424 (adding of 1 LSB) to the second inputs of adders 417 and 418, representing signal $\Delta$. The outputs of these adders are respective connected via horizontal lowpass filters 415 and 416 to the second inputs of adders 413 and 414.

The output of adder 413 represents signal $\Delta_{up}$ and is connected to the first input of adder 45 and to the first input of multiplier 47. The output of adder 414 represents signal $\Delta_{down}$ and is connected to the second input of adder 45. The output of adder 45 is connected via a reciprocal value circuit 46 to the second input of multiplier 47. The output signal $\alpha$ of this multiplier is connected to the second input of multiplier 443.

If the signals $\Delta_{lum\ up}$ and $\Delta_{lum\ down}$ are not used for the interpolation, all circuits of the luminance processing, except delay circuit 400, can be omitted.

The adaptive filter has been tested within a digital SECAM decoder. The simulation has shown that the impact of the filter on the picture quality is very impressive and that this kind of interpolation gives always better results than the simple line repetition in the analogue decoder.

The results indicate that the adaptive vertical interpolation filter offers a maximum sharpness at horizontal edges. In contrast to that the known linear pre- and post-filtering is not able to achieve this sharpness because this filtering has to cope with the vertical resolution, the flickering and the aliasing together in a linear way of processing. This can at best result in a compromise between these parameters.

If the source signal contains extremely fine vertical details advantageously an approximate pre-filtering should be foreseen. However, in order to supply a better picture quality the adaptive vertical interpolation filter in the decoder should always be used.

The inventive interpolation can be used for all TV systems or recording systems based on an alternate-line transmission.

## Claims

1. Method for vertical chrominance interpolation of lines in alternate line transmission TV systems and/or recording systems, **characterized** in that pixel values C(i)$_{int}$ of missing pixels in alternate lines are calculated according to the formula

$$C(i)_{int} = [\Delta_{down} * C(i-1) + \Delta_{up} * C(i+1)] / [\Delta_{down} + \Delta_{up}],$$

   pixel difference $\Delta_{down} = |C(i)-C(i+2)|,$
   pixel difference $\Delta_{up} = |C(i)-C(i-2)|,$

   wherein C(i) is the respective value from the actual line and C(i-1) is the respective value from the line above and C(i-2) is the respective value from the preceding line and C(i+1) is the respective value from the line below and C(i+2) is the respective value from the following line,
   and wherein the C(i)$_{int}$, C(i-1) and C(i+1) values correspond to lines with an U colour component and the C(i), C(i-2) and C(i+2) values correspond to lines with a V colour component and viceversa, respectively.

2. Method according to claim, wherein said interpolation is adaptively changed to

$$C(i)_{int} = [C(i-1) + C(i+1)] / 2,$$

   if the values of C(i-1) and C(i+1) are equal.

3. Method according to claim 1 or 2, wherein

$$\Delta = 1/[\,|C(i-1)-C(i+1)|+\varepsilon_1\,]+\varepsilon_2$$

is added to said pixel differences ($\Delta_{down}$, $\Delta_{up}$), and wherein $\varepsilon_1$ and $\varepsilon_2$ are small figures, e.g. one LSB bit or a value '1'.

4. Method according to any of claims 1 to 3, wherein respective luminance pixel differences ($\Delta_{lum\ down}$, $\Delta_{lum\ up}$) are added to said pixel differences ($\Delta_{down}$, $\Delta_{up}$) of said colour components.

5. Method according to any of claims 1 to 4, wherein said pixel differences ($\Delta_{down}$, $\Delta_{up}$, $\Delta_{lum\ down}$, $\Delta_{lum\ up}$) are respectively horizontally low pass filtered or are respectively averaged over five horizontal adjacent pixel positions.

6. Method according to any of claims 1 to 5, wherein the transmitted and/or recorded source lines (C(i-2), C(i-1), C(i), C(i+1), C(i+2)) are vertically prefiltered prior to transmission and/or recording.

7. Apparatus for a method according to any of claims 1 to 6, consisting of a first line delay circuit (431) to which U colour component and V colour component input signals are fed and which input is connected to the inverting input of a first combination circuit (421), wherein the output of said first line delay circuit (431) is connected to a second line delay circuit (432), to the inverting inputs of a second combination circuit (420) and of a third combination circuit (441) and to the first input of a first adder (442), and wherein the output of said second line delay circuit (432) is connected to a third line delay circuit (433), to the non-inverting input of said first combination circuit (421), to the inverting input of a fourth combination circuit (422) and to the first input of a multiplexer (444) which outputs the U colour component and V colour component output signals and wherein the output of said third line delay circuit (433) is connected to a fourth line delay circuit (434) and to the non-inverting inputs of said second (420) and said third (441) combination circuits, and wherein the output of said fourth line delay circuit (434) is connected to the non-inverting input of said fourth combination circuit (422) and the output of said third combination circuit (441) is connected to the first input of a first multiplier (443) and the output of this multiplier is connected to the second input of said first adder (442) and the output of this adder is connected to the second input of said multiplexer (444) and the output of said first combination circuit (421) is connected via a first absolute value circuit (419) to the first input of a second adder (417), representing signal $\underline{\Delta}_{up}$, and the output of said fourth combination circuit (422) is connected via a second absolute value circuit (420) to the first input of a third adder (418), representing signal $\underline{\Delta}_{down}$, and the output of said second combination circuit (420) is connected via a third absolute value circuit (423) and via a modified reciprocal value circuit (424), which adds e.g. one LSB, to the second inputs of said second (417) and third (418) adders, representing signal $\Delta$, and wherein the output of said second adder (417) is connected via a first horizontal lowpass filter (415) to the first input of a fourth adder (45) and to the first input of a second multiplier (47), representing signal $\Delta_{up}$, and the output of said second adder (417) is connected via a second horizontal lowpass filter (416) to the second input of said fourth adder (45), representing signal $\Delta_{down}$, and wherein the output of said fourth adder (45) is connected via a reciprocal value circuit (46) to the second input of said second multiplier (47) and the output signal $\alpha$ of this multiplier is connected to the second input of said first multiplier (443) and said multiplexer (444) is synchronized by the U/V colour alternation signal coming from a line identification signal (48).

8. Apparatus according to claim 7, additionally consisting of a fifth line delay circuit (401) to which the Y luminance input signal is fed and which input is connected to the inverting input of a fifth combination circuit (403) and wherein the output of said fifth line delay circuit (401) is connected to a sixth line delay circuit (402), to the non-inverting input of said fifth combination circuit (403) and to the inverting input of a sixth combination circuit (404) and the output of said sixth line delay circuit (402) is connected to the non-inverting input of said sixth combination circuit (404) and to a delay circuit (400) which outputs the Y luminance output signal which delay time T is matched to the U/V processing time, and wherein the output signal of said fifth combination circuit (403) is serially fed to a fourth absolute value circuit (405), to a third horizontal low pass filter (407), to a first subsampling circuit (409), to a seventh line delay circuit (411) and to the first input of a fifth adder (413) which adds the output signal of said seventh line delay circuit (411) to the input signals of said fourth adder (45) and said second multiplier (47), and wherein the output signal of said sixth combination circuit (404) is serially fed to a fifth absolute value circuit (406), to a fourth horizontal low pass filter (408), to a second subsampling circuit (410), to an eighth line delay circuit (412) and to the first input of a sixth adder (414) which adds the output signal of said eighth line delay circuit (412) to the input signal of said fourth adder (45).

## Revendications

1. Procédé pour l'interpolation verticale de chrominance de lignes dans des systèmes de télévision et/ou des systèmes d'enregistrement à transmission d'une ligne sur deux, caractérisé en ce que les valeurs de pixels $C(i)_{int}$ des pixels manquants dans une ligne sur deux sont calculées suivant la formule suivante

$$C(i)_{int} = [\Delta_{bas}*C(i-1)+\Delta_{haut}*C(i+1)]/[\Delta_{bas}+\Delta_{haut}],$$

différence de pixels $\Delta_{bas} = IC(i)-C(i+2)I$,
différence de pixels $\Delta_{haut} = IC(i)-C(i-2)I$,

où $C(i)$ est la valeur respective de la ligne présente, $C(i-1)$ est la valeur respective de la ligne surjacente, $C(i-2)$ est la valeur respective de la ligne précédente, $C(i+1)$ est la valeur respective de la ligne sous-jacente et $C(i+2)$ est la valeur respective de la ligne suivante et où les valeurs de $C(i)_{int}$, $C(i-1)$ et $C(i+1)$ correspondent aux lignes présentant une composante de couleur U et les valeurs de $C(i)$, $C(i-2)$ et $C(i+2)$ correspondent aux lignes présentant une composante de couleur V et vice versa, respectivement.

2. Procédé suivant la revendication 1, dans lequel ladite interpolation est changée de manière adaptative en

$$C(i)_{int} = [C(i-1)+C(i+1)]/2,$$

si les valeurs de $C(i-1)$ et de $C(i+1)$ sont égales.

3. Procédé suivant la revendication 1 ou 2, dans lequel $\Delta = 1/[IC(i-1)-C(i+1)I+\varepsilon_1]+\varepsilon_2$ est ajouté auxdites différences de pixels ($\Delta_{bas}$, $\Delta_{haut}$) et dans lequel $\varepsilon_1$ et $\varepsilon_2$ sont des petits chiffres, par exemple un binaire de poids faible ou une valeur "1".

4. Procédé suivant l'une quelconque des revendications 1 à 3, dans lequel des différences de pixels de luminance ($\Delta_{lum\ bas}$, $\Delta_{lum\ haut}$) sont ajoutées auxdites différences de pixels ($\Delta_{bas}$, $\Delta_{haut}$) desdites composantes de couleur.

5. Procédé suivant l'une quelconque des revendications 1 à 4, dans lequel lesdites différences de pixels ($\Delta_{bas}$, $\Delta_{haut}$, $\Delta_{lum\ bas}$, $\Delta_{lum\ haut}$) sont filtrées passe-bas horizontalement ou sont respectivement moyennées sur cinq positions de pixels adjacentes horizontales.

6. Procédé suivant l'une quelconque des revendications 1 8 5, dans lequel les lignes sources transmises et/ou enregistrées ($C(i-2)$, $C(i-1)$, $C(i)$, $C(i+1)$, $C(i+2)$) sont préfiltrées verticalement avant la transmission et/ou l'enregistrement.

7. Appareil pour un procédé suivant l'une quelconque des revendications 1 à 6, consistant en un premier circuit à retard de ligne (431) auquel des signaux d'entrée de composantes de couleur U et V sont appliqués et dont l'entrée est connectée à l'entrée inverseuse d'un premier circuit mélangeur (421), dans lequel la sortie dudit premier circuit à retard de ligne (431) est connectée à un deuxième circuit à retard de ligne (432), aux entrées inverseuses d'un deuxième circuit mélangeur (420) et d'un troisième circuit mélangeur (441) et à la première entrée d'un premier additionneur (442), et dans lequel la sortie dudit deuxième circuit à retard de ligne (432) est connectée à un troisième circuit à retard de ligne (433), à l'entrée non inverseuse dudit premier circuit mélangeur (421), à l'entrée inverseuse d'un quatrième circuit mélangeur (422) et à la première entrée d'un multiplexeur (444) qui fournit les signaux de sortie des composantes de couleur U et V, et dans lequel la sortie dudit troisième circuit à retard de ligne (433) est connectée à un quatrième circuit à retard de ligne (434) et aux entrées non inverseuses desdits deuxième (420) et troisième (441) circuits mélangeurs, et dans lequel la sortie dudit quatrième circuit à retard de ligne (434) est connectée à l'entrée non inverseuse dudit quatrième circuit mélangeur (422) et la sortie dudit troisième circuit mélangeur (441) est connectée à la première entrée d'un premier multiplicateur (443) et la sortie de ce multiplicateur est connectée à la deuxième entrée dudit premier additionneur (442) et la sortie de cet additionneur est connectée à la deuxième entrée dudit multiplexeur (444) et la sortie dudit premier circuit mélangeur (421) est connectée via un premier circuit de valeur absolue (419) à la première entrée d'un deuxième additionneur (417), représentant le signal $\Delta_{haut}$, et la sortie dudit quatrième circuit mélangeur (422) est connectée via un deuxième circuit de valeur absolue (420) à la première entrée d'un troisième additionneur (418), représentant le signal

$\Delta_{bas}$, et la sortie dudit deuxième circuit mélangeur (420) est connectée via un troisième circuit de valeur absolue (423) et via un circuit de valeur réciproque modifié (424), qui ajoute par exemple un binaire de poids faible, aux deuxièmes entrées desdits deuxième (417) et troisième (418) additionneurs, représentant le signal $\Delta$, et dans lequel la sortie dudit deuxième additionneur (417) est connectée via un premier filtre passe-bas horizontal (415) à la première entrée d'un quatrième additionneur (45) et à la première entrée d'un deuxième multiplicateur (47), représentant le signal $\Delta_{haut}$, et la sortie dudit deuxième additionneur (417) est connectée via un deuxième filtre passe-bas horizontal (416) à la deuxième entrée dudit quatrième additionneur (45), représentant le signal $\Delta_{bas}$, et dans lequel la sortie dudit quatrième additionneur (45) est connectée via un circuit de valeur réciproque (46) à la deuxième entrée dudit deuxième multiplicateur (47) et le signal de sortie a de ce multiplicateur est connecté à la deuxième entrée dudit premier multiplicateur (443) et ledit multiplexeur (444) est synchronisé par le signal d'alternance de couleur U/V provenant d'un signal d'identification de ligne (48).

8. Appareil suivant la revendication 7, consistant en outre en un cinquième circuit à retard de ligne (401) auquel le signal d'entrée de luminance Y est appliqué et dont l'entrée est connectée à l'entrée inverseuse d'un cinquième circuit mélangeur (403) et dans lequel la sortie dudit cinquième circuit à retard de ligne (401) est connectée à un sixième circuit à retard de ligne (402), à l'entrée non inverseuse dudit cinquième circuit mélangeur (403) et à l'entrée inverseuse d'un sixième circuit mélangeur (404) et la sortie dudit sixième circuit à retard de ligne (402) est connectée à l'entrée non inverseuse dudit sixième circuit mélangeur (404) et à un circuit à retard (400) qui fournit le signal de sortie de luminance Y dont le temps de retard $\tau$ est adapté au temps de traitement U/V, et dans lequel le signal de sortie dudit cinquième circuit mélangeur (403) est appliqué en série à un quatrième circuit de valeur absolue (405), à un troisième filtre passe-bas horizontal (407), à un premier circuit de sous-échantillonnage (409), à un septième circuit à retard de ligne (411) et à la première entrée d'un cinquième additionneur (413) qui ajoute le signal de sortie dudit septième circuit à retard de ligne (411) aux signaux d'entrée dudit quatrième additionneur (45) et dudit deuxième multiplicateur (47), et dans lequel le signal de sortie dudit sixième circuit mélangeur (404) est appliqué en série à un cinquième circuit de valeur absolue (406), à un quatrième filtre passe-bas horizontal (408), à un deuxième circuit de sous-échantillonnage (410), à un huitième circuit à retard de ligne (412) et à la première entrée d'un sixième additionneur (414) qui ajoute le signal de sortie dudit huitième circuit à retard de ligne (412) au signal d'entrée dudit quatrième additionneur (45).

## Patentansprüche

1. Verfahren zur vertikalen Chrominanzinterpolation von Zeilen in Fernsehübertragungssystemen und/oder Aufzeichnungssystemen mit alternierender zeilenweiser Übertragung, dadurch gekennzeichnet daß die Pixelwerte $C(i)_{int}$ von fehlenden Pixeln in abwechselnden Zeilen gemäß der Formel berechnet werden:

$$C(i)_{int} = [\Delta_{down} * C(i-1) + \Delta_{up} * C(i+1)] / [\Delta_{down} + \Delta_{up}],$$

Pixelunterschied $\Delta_{down} = |C(i) - C(i+2)|,$
Pixelunterschied $\Delta_{up} = |C(i) - C(i-2)|,$

worin C(i) der entsprechende Wert von der aktuellen Zeile und C(i-1) der entsprechende Wert von der Zeile oberhalb und C(i-2) der entsprechende Wert von der vorhergehenden Zeile und C(i+1) der entsprechende Wert von der Zeile unterhalb und C(i+2) der entsprechende Wert von der folgenden Zeile ist, und wobei die Werte von $C(i)_{int}$, C(i-1) und C(i+1) Zeilen mit einer U-Farbkomponente und die Werte von C(i), C(i-2) und C(i+2) Zeilen mit einer V-Farbkomponente bzw. umgekehrt entsprechen.

2. Verfahren nach Anspruch 1, bei dem die Interpolation adaptiv geändert wird in

$$C(i)_{int} = [C(i-1) + C(i+1)] / 2,$$

wenn die Werte von C(i-1) und C(i+1) gleich sind.

3. Verfahren nach Anspruch 1 oder 2, bei dem

$$\Delta = 1/[|C(i-1)-C(i+1)|+\varepsilon_1]+\varepsilon_2$$

zu den Pixelunterschieden ($\Delta_{down}$, $\Delta_{up}$) addiert wird, und bei dem $\varepsilon_1$ und $\varepsilon_2$ kleine Zahlen sind, z.B. ein LSB-Bit oder ein Wert '1'.

4.  Verfahren nach Anspruch 1 bis 3, bei dem entsprechende Luminanz-Pixel-Unterschiede ($\Delta_{lum\ down}$, $\Delta_{lum\ up}$) zu den Pixel-Unterschieden ($\Delta_{down}$, $\Delta_{up}$) der Farbkomponenten addiert werden.

5.  Verfahren nach einem der Ansprüche 1 bis 4, bei dem die Pixelunterschiede ($\Delta_{down}$, $\Delta_{up}$, $\Delta_{lum\ down}$, $\Delta_{lum\ up}$) jeweils horizontal tiefpaßgefiltert werden, bzw. von fünf horizontal benachbarten Pixelpositionen der Durchschnitt gebildet wird.

6.  Verfahren nach einem der Ansprüche 1 bis 5, bei dem die übertragenen und/oder aufgezeichneten Quellenzeilen (C(i-2), C(i-1), C(i), C(i+1), C(i+2)) vor der Übertragung und/oder Aufzeichnung vertikal vorgefiltert werden.

7.  Vorrichtung für ein Verfahren nach einem der Ansprüche 1 bis 6, bestehend aus einer ersten Zeilenverzögerungsschaltung (431), der U-Farbkomponenten- und V-Farbkomponenten-Eingangssignale zugeführt werden, und deren Eingang mit dem invertierenden Eingang einer ersten Kombinationsschaltung (421) verbunden ist, wobei der Ausgang der ersten Zeilenverzögerungsschaltung (431) mit einer zweiten Zeilenverzögerungsschaltung (432), mit den invertierenden Eingängen einer zweiten Kombinationsschaltung (420) und einer dritten Kombinationsschaltung (441) und dem ersten Eingang einer ersten Addierschaltung (442) verbunden ist, und wobei der Ausgang der zweiten Zeilenverzögerungsschaltung (432) mit einer dritten Zeilenverzögerungsschaltung (433), mit dem nicht-invertierenden Eingang der ersten Kombinationsschaltung (421), mit dem invertierenden Eingang einer vierten Kombinationsschaltung (422) und mit dem ersten Eingang eines Multiplexers (444) verbunden ist, der am Ausgang die U-Farbkomponenten- und die V-Farbkomponenten-Ausgangssignale liefert, und wobei der Ausgang der dritten Zeilenverzögerungsschaltung (443) mit einer vierten Zeilenverzögerungsschaltung (434) und mit den nicht-invertierenden Eingängen der zweiten (420) und dritten (441) Kombinationsschaltung verbunden ist, und wobei der Ausgang der vierten Zeilenverzögerungsschaltung (434) mit dem nicht-invertierenden Eingang der vierten Kombinationsschaltung (422) und der Ausgang der dritten Kombinationsschaltung (441) mit dem ersten Eingang einer ersten Multiplizierschaltung (443) verbunden ist, und wobei der Ausgang dieser Multiplizierschaltung mit dem zweiten Eingang der ersten Addierschaltung (442) und der Ausgang dieser Addierschaltung mit dem zweiten Eingang des Multiplexers (444) und der Ausgang der ersten Kombinationsschaltung (421) über eine erste Absolutwert-Schaltung (419) mit dem ersten Eingang einer zweiten Addierschaltung (417), die das Signal $\Delta_{up}$ darstellt, verbunden ist, und wobei der Ausgang der vierten Kombinationsschaltung (422) über eine zweite Absolutwert-Schaltung (420) mit dem ersten Eingang einer dritten Addierschaltung (418), die das Signal $\Delta_{down}$ darstellt, verbunden ist, und wobei der Ausgang der zweiten Kombinationsschaltung (420) über eine dritte Absolutwert-Schaltung (423) und über eine modifizierte Reziprokwert-Schaltung (424), die z.B. ein LSB hinzufügt, mit dem zweiten Eingang der zweiten (417) bzw. dritten (418) Addierschaltung, die das Signal $\Delta$ darstellen, verbunden ist, und wobei der Ausgang der zweiten Addierschaltung (417) über ein erstes Horizontal-Tiefpaßfilter (415) mit dem ersten Eingang einer vierten Addierschaltung (45) und mit dem ersten Eingang einer zweiten Multiplizierschaltung (47), der das Signal $\Delta_{up}$ darstellt, verbunden ist, und wobei der Ausgang der zweiten Addierschaltung (417) über ein zweites Horizontal-Tiefpaßfilter (416) mit dem zweiten Eingang der vierten Addierschaltung (45), der das Signal $\Delta_{down}$ darstellt, verbunden ist, und wobei der Ausgang der vierten Addierschaltung (45) über eine Reziprokwert-Schaltung (46) mit dem zweiten Eingang der zweiten Multiplizierschaltung (47) und das Ausgangssignal $\alpha$ dieser Multiplizierschaltung mit dem zweiten Eingang der ersten Multiplizierschaltung (443) verbunden ist, und wobei der Multiplexer (444) durch das von einem Zeilen-Identifikationssignal (48) kommende alternierende U/V-Farbsignal synchronisiert wird.

8.  Vorrichtung nach Anspruch 7, die zusätzlich aus einer fünften Zeilenverzögerungsschaltung (401) besteht, der das Y-Luminanz-Eingangssignal zugeführt wird, und deren Eingang mit dem invertierenden Eingang einer fünften Kombinationsschaltung (403) verbunden ist, und wobei der Ausgang der fünften Zeilenverzögerungsschaltung (401) mit einer sechsten Zeilenverzögerungsschaltung (402), mit dem nicht-invertierenden Eingang der fünften Kombinationsschaltung (403) und mit dem invertierenden Eingang einer sechsten Kombinationsschaltung (404) verbunden ist, und wobei der Ausgang der sechsten Zeilenverzögerungsschaltung (402) mit dem nicht-invertierenden Eingang der sechsten Kombinationsschaltung (404) und mit einer Verzögerungsschaltung (400) verbunden ist, deren Ausgang das Y-Luminanz-Ausgangssignal ist, wobei die Verzögerungszeit $\tau$ an die U/V-Verarbeitungszeit angepaßt wird, und wobei das Ausgangssignal der fünften Kombinationsschaltung (403) seriell einer vierten Absolutwert-Schaltung (405), einem dritten Horizontal-Tiefpaßfilter (407), einer ersten Unter-Abtastschaltung (409), einer siebten Zeilenverzögerungsschaltung (411) und dem ersten Eingang einer fünften Addierschaltung (413) zugeführt wird, die das Ausgangssignal der siebten Zeilenverzögerungsschaltung (411) zu den Eingangssignalen der vierten Addierschaltung (45) und der zweiten Multiplizierschaltung (47) addiert, und wobei das Ausgangssignal der sechsten Kombinationsschaltung (404) seriell einer fünften Absolutwert-Schaltung (406), einem vierten Horizontal-Tiefpaßfilter (408), einer zweiten Unter-Abtastschaltung (410) und einer achten Zeilenverzögerungsschaltung (412) und dem ersten Eingang einer sechsten Addierschaltung (414) zugeführt wird, die das Ausgangssignal der achten Zeilenverzögerungsschaltung (412) zum Eingangssignal der vierten Addierschaltung (45) addiert.

Fig.1

Fig. 2

Fig. 3

Fig.4